# EUROPÄISCHE PATENTANMELDUNG

(11) **EP 0 562 253 A1**
(43) Veröffentlichungstag der Anmeldung: **29.09.1993**
(21) Anmeldenummer: 93101973.1
(22) Anmeldetag: 09.02.1993
(51) Int. Cl.: B23K 11/06

(54) **Verwendung eines gas- und flüssigkeitsdichten Schweissverfahrens**

(30) Priorität: 27.03.1992 DE 4209959
(71) Anmelder: Bayerische Motoren Werke Aktiengesellschaft, 80788 München (DE)
(72) Erfinder: Strohmayer, Manfred, W-8013 Haar (DE)

(57) **Zusammenfassung**

Um eine höhere Gestaltungsfreiheit bei der Herstellung von Kraftfahrzeugtanks aus Blech zu haben, wird vorgeschlagen, die Flanschnaht, über die die beiden Halbschalen zusammengeschweißt werden, nun nicht mehr in einer Ebene laufen zu lassen, sondern räumlich verlaufen zu lassen.

## Beschreibung

Die Erfindung bezieht sich auf die Verwendung eines gas- und flüssigkeitsdichten Schweißverfahrens zum Verbinden zweier Halbschalen eines aus Blech hergestellten Kraftfahrzeugtanks.

Kraftfahrzeugtanks werden entweder aus Kunststoff oder Blech hergestellt. Die aus Blech hergestellten Kraftfahrzeugtanks für Personenkraftwagen bestehen in der Regel aus zwei Halbschalen mit je einem umlaufenden, nach außen weisenden Flansch. Über diesen Flansch werden die beiden Halbschalen gas- und flüssigkeitsdicht durch entsprechende Schweißverfahren verbunden. Hierbei hat man den Flansch immer in eine einzige Ebene gelegt, da sonst wirtschaftlich arbeitende Schweißverfahren nicht verwandt werden konnten. Die Lage des Flansches und damit die Trennlinie zwischen den beiden Halbschalen wurden sowohl nach Einbaugesichtspunkten als auch nach den Herstellungsmöglichkeiten der beiden Halbschalen gebildet. Dadurch war es nicht möglich, optimal an den Einbauraum angepaßte Kraftfahrzeugtanks aus Blech wirtschaftlich herzustellen.

Aufgabe der vorliegenden Erfindung ist es, hier Abhilfe zu schaffen.

Diese Aufgabe wird erfindungsgemäß durch die kennzeichnenden Merkmale des ersten Anspruchs gelöst. Dadurch, daß jetzt Aufnahmevorrichtungen, beispielsweise Roboter, zur Verfügung stehen, die ein Werkstück exakt nach einer vorgegebenen Bahn führen können, ist es möglich, nunmehr auch räumlich verlaufende Flansche flüssigkeitsdicht zu schweißen, ohne daß erhöhte Herstellungskosten entstehen. Damit ergibt sich eine wesentlich größere Gestaltungsfreiheit bei der Behälterform. Somit können auch aus Blech hergestellte Kraftfahrzeugtanks ähnlich gut an den vorhandenen Bauraum angepaßt werden wie geblasene Kunststofftanks. Dadurch ergibt sich auch eine Erhöhung des Fassungsvermögens des Tanks.

Als besonders geeignetes Schweißverfahren wird nach Anspruch 2 das Rollnahtschweißen vorgeschlagen. Es ist aber auch denkbar, Laserschweißen anzuwenden.

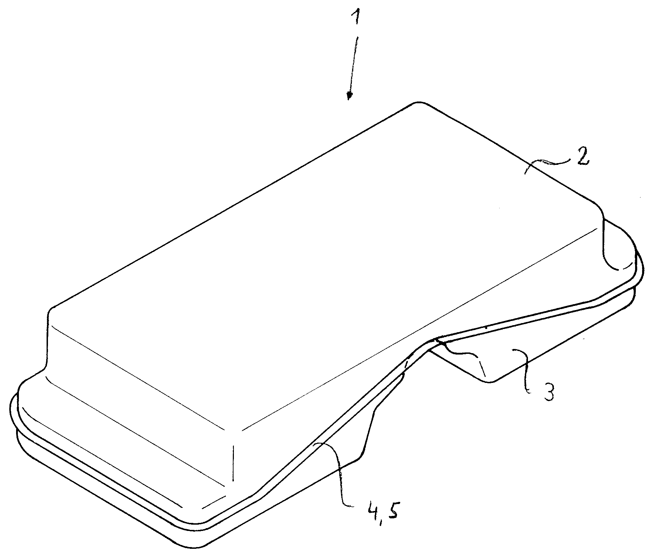

In der einzigen Figur ist perspektivisch ein nach der Erfindung herstellbarer Kraftfahrzeugtank 1 dargestellt. Er besteht aus der oberen Schalenhälfte 2 und der unteren Schalenhälfte 3. Jede Schalenhälte weist ein umlaufenden Flansch 4, 5 auf, der nach außen absteht. Über die beiden Flansche, die parallel zueinander verlaufen, werden die beiden Schalenhälften gas- und flüssigkeitsdicht miteinander verschweißt.

Wie die Abbildung erkennen läßt, verlaufen nunmehr die Flansche nicht mehr in einer einzigen Ebene, sondern besitzen einen räumlichen Verlauf.

Eine geeignete Vorrichtung zur Herstellung des Tanks zeigt beispielsweise die DE PS 3603919. Dort wird eine Rollnahtschweißmaschine beschrieben, bei der das Werkstück von einem Industrieroboter mit einer geeigneten Aufnahmevorrichtung gehalten wird. Aufgrund der Freiheitsgrade des Industrieroboter ist der in der Abbildung dargestellte Tank mit seiner räumlich verlaufen Schweißnaht problemlos herzustellen.

## Patentansprüche

1. Verwendung eines gas- und flüssigkeitsdichten Schweißverfahrens zum Verbinden zweier Halbschalen (2, 3) eines aus Blech hergestellten Kraftfahrzeugtanks (1), bei dem jede Halbschale (2, 3) einen umlaufenden, nach außen weisenden Flansch (4, 5) besitzt, die beide parallel zueinander verlaufen und einen räumlichen (dreidimensionalen) Verlauf aufweisen.

2. Schweißverfahren zur Anwendung nach Anspruch 1, dadurch gekennzeichnet, daß als gas- und flüssigkeitsdichtes Schweißverfahren das Rollnahtschweißen verwandt wird.
